# EUROPÄISCHE PATENTANMELDUNG

(11) **EP 1 245 923 A2**
(43) Veröffentlichungstag der Anmeldung: **02.10.2002**
(21) Anmeldenummer: 02011396.5
(22) Anmeldetag: 06.06.1997
(51) Int. Cl.: G01B 11/25, B23K 9/095, B23K 9/127, G06T 7/00, G01N 21/956

(54) **Verfahren und Vorrichtung zur Kantenverfolgung und Kantenprüfung**

(30) Priorität: 29.07.1996 CH 188296
(62) Teilanmeldung aus: 97109160.8
(71) Anmelder: ELPATRONIC AG, 8962 Bergdietikon (CH)
(72) Erfinder: Wildmann,Daniel,Dr., 8157 Dielsdord (CH); Buchmann,Christa, 8424 Embrach (CH)

(57) **Zusammenfassung**

Zur Verfolgung und Prüfung einer Kante (13) zwischen zwei zu verschweissenden Blechen (6,7) wird durch einen Projektor (2) ein Linienmuster (5) über die Kante (13) projiziert und von einer Kamera (3) aufgenommen. Das aufgenommene Bild wird analysiert, um aus dem Linienverlauf Rückschlüsse über den Spalt zwischen den Blechen oder den Kantenverlauf zu ziehen. Gemäss der Erfindung wird aufgrund der Auswertung eines Bildes die Belichtungssteuerung für das nächste Bild oder die Helligkeit des Linienmusters beeinflusst. Dies erlaubt es, bei der Bildverarbeitung des aufgenommenen Bildes auch bei sich änderndem Reflexionsverhalten der Bleche eine Linie auszuwählen, welche im Bild nicht zu schwach und nicht überstrahlend dargestellt ist und welche somit für eine aussagekräftige Auswertung herangezogen werden kann.

## Beschreibung

Die Erfindung betrifft ein Verfahren gemäss Oberbegriff des Anspruchs 1 bzw. eine Vorrichtung gemäss Oberbegriff des Anspruchs 3.

Es ist bekannt, Bleche durch Schweissung zu grösseren Bauteilen (sogenannte tailored blanks) zu verschweissen, welche anschliessend einem Umformungsprozess unterworfen werden. Ein Anwendungsgebiet von solchen "tailored blanks" liegt z.B. in der Automobilindustrie. Die Verschweissung der Bleche kann durch Quetschnahtschweissen und Laserschweissen erfolgen. Da die Schweissnaht zusammen mit den Blechen dem Umformungsprozess unterworfen ist, ist eine einwandfreie Qualität der gesamten Naht wesentlich. Die zu verschweissenden Bleche werden mit ihren gemeinsamen Kanten aneinanderliegend der Schweissstelle zugeführt, wobei es wichtig ist, dass der fokussierte Laserstrahl möglichst genau der gemeinsamen Kante der aneinanderliegenden Bleche folgt. Zu diesem Zweck werden Einrichtungen eingesetzt, die den genauen Kantenverlauf vor der Schweisszone ermitteln, wodurch der Laserstrahl bei der Schweissung entsprechend geführt werden kann. Eine bekannte Einrichtung projiziert zu diesem Zweck ein Linienmuster konstanter Intensität quer über die Kante, welches Muster von einer Kamera aufgenommen wird, deren Bild von einem Rechner ausgewertet wird, um aus dem Verlauf mindestens einer der Linien auf den Verlauf der Kante bzw. des Spaltes zwischen den Blechen an diesem Ort zu schliessen. Auf diese Weise werden die Kante und der Spalt entlang seiner ganzen Länge, vor der Schweisszone verfolgt und der Laserstrahl zur Schweissung entsprechend gesteuert.

Nach der Schweisszone kann auf ähnliche Weise das Profil der Schweissnaht ermittelt werden, wodurch Schweissfehler erkannt werden können.

Sowohl bei der Kantenverfolgung vor der Schweissung als insbesondere auch bei der Kantenprüfung bzw. Schweissnahtprüfung nach der Schweissung, stellt sich das Problem, dass die Reflektivität der Bleche sehr unterschiedlich ist. Die einzelnen Bleche können mit verschiedenen Oberflächenbeschichtungen versehen sein, einen Oelfilm aufweisen oder nicht, glänzend oder nichtglänzend sein, Schmauchspuren aufweisen usw. Die dadurch hervorgerufenen grossen Helligkeitsunterschiede können den Dynamikbereich der eingesetzten Kameras übersteigen, wodurch die Linien zu hell oder zu dunkel abgebildet werden, was die Bildauswertung erschweren oder allenfalls sogar verunmöglichen kann. Dadurch kann im Fall der Kantenverfolgung die Schweissgeschwindigkeit leiden oder es können Schweissfehler entstehen; im Fall der Kantenprüfung können Fehler evtl. nur schwer erkannt werden oder Fehler werden angenommen, wo keine vorhanden sind.

Der Erfindung liegt deshalb die Aufgabe zugrunde, das Verfahren der eingangs genannten Art bzw. die Vorrichtung der eingangs genannten Art so zu verbessern, dass die Auswertung des aufgenommenen Bildes auch unter schlechten Bedingungen ohne Probleme möglich ist.

Dies wird gemäss einem ersten Aspekt der Erfindung mit den kennzeichnenden Merkmalen des Anspruchs 1 betreffend die Belichtungssteuerung der Kamera erreicht.

Demgemäss wird bei jeder Bildauswertung festgestellt, ob die Helligkeit der Linien in einem vorgegebenen Rahmen liegt und wenn nicht, so wird ein Steuersignal erzeugt, welches für die nächste Bildaufnahme die Belichtungskontrolle der Aufnahmeeinrichtung beeinflusst, so dass das nächste Bild heller oder dunkler wird.

Gemäss einem weiteren Aspekt der Erfindung wird die Aufgabe mit den kennzeichnenden Merkmalen des Anspruchs 1 betreffend die Helligkeitssteuerung des Linienprojektors gelöst.

Dadurch, dass die Helligkeit bzw. die Intensität des Projektors generell geändert wird, kann ebenfalls die Reflektivität unterschiedlicher Bleche kompensiert werden.

Im folgenden werden Ausführungsbeispiele der Erfindung anhand der Figuren näher erläutert. Dabei zeigt
Figur 1 schematisch eine grundsätzliche Anordnung von Linienprojektor und Kamera und
Figur 2 eine schematische Darstellung mit einer Vorrichtung zur Kantenverfolgung und zwei Vorrichtungen zur Kanten- bzw. Schweissnahtprüfung.

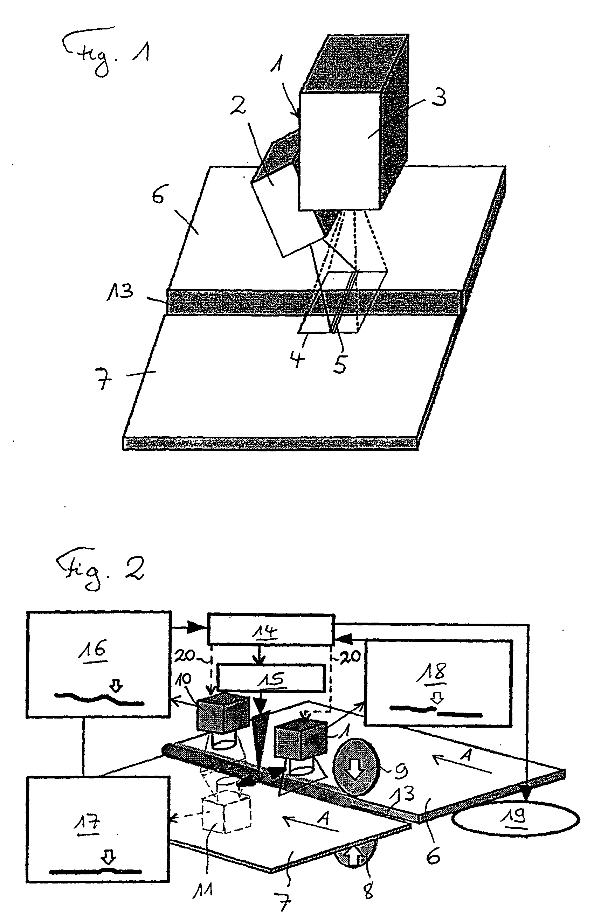

In Figur 1 sind 2 Bleche 6 und 7 gezeigt, welche aneinander anliegen und eine gemeinsame Kante 13 aufweisen. Diese Bleche werden entlang der Kante 13 z.B. durch Laserschweissung miteinander verbunden. Zur Verfolgung des Kantenverlaufs bzw. zur Prüfung der Schweissnaht ist es bekannt, mehrere Linien 5 aus Licht quer zur Kante 13 auf diese und den benachbarten Bereich der beiden Bleche zu projizieren. In dem gezeigten Beispiel sind lediglich 3 Linien dargestellt, es könnte sich aber auch um eine andere Anzahl Linien handeln. Die Linien verlaufen im 90°-Winkel oder schräg zur Kante 13 und befinden sich innerhalb des Erfassungsbereiches einer Aufnahmeeinrichtung 3, welche insbesondere von einer CCD-Kamera gebildet sein kann. Der Projektor 2 für die Projektion der Linien 5 wird vorzugsweise von einer Laserlichtquelle gebildet, hinter welcher ein Beugungsgitter angeordnet ist, das die Linien 5 als Beugungslinien erzeugt. Das von der Kamera 3 erfasste Bild wird in einer Bildauswerte-Einrichtung ausgewertet, um mittels des Verlaufs mindestens einer der Linien 5 den Verlauf des Spaltes zwischen den Blechen 6 und 7 entlang der Kante 13 zu bestimmen, bzw. um nach der Verschweissung der Bleche den Verlauf der Schweissnaht zu bestimmen. Figur 2 zeigt eine solche Vorrichtung, bei welcher mehrere Anordnungen gemäss Figur 1 vorgesehen sind, nämlich eine Anordnung 1 vor der Schweisszone und zwei Anordnungen 10 und 11 nach der Schweisszone. In Figur 2 ist ersichtlich, dass die Bleche 6 und 7, welche z.B. in Schweissrichtung eine Länge von 2 m aufweisen können, durch eine nicht gezeigte Fördereinrichtung in Richtung der Pfeile A in zueinander genau fixierter Stellung durch die Vorrichtung gefördert werden. Vor der Kantenverfolgungsvorrichtung 1 kann eine Umformungseinrichtung mit den Rollen 8 und 9 vorgesehen sein, welche durch das Verformen des dickeren Bleches 6 den zwischen den Blechen bestehenden Spalt möglichst verkleinert. Der genaue Verlauf des Spaltes wird dann durch die Kantenverfolgungseinrichtung 1 festgestellt, indem diese, wie bereits beschrieben, ein Linienmuster quer zur Kante 13 über diese projiziert und mittels einer Kamera das Linienmuster erfasst und ausgewertet wird. Durch die Projektionseinrichtung können z.B. fünf parallel verlaufende Linien über die Kante projiziert werden. Das Bild aus der Kamera der Anordnung 1 gelangt zu einer Auswerteinrichtung 18, welche den genauen Verlauf des Spaltes bestimmt. Von der Auswerteinrichtung 18 gehen Steuersignale an eine Steuereinrichtung 14, welche ihrerseits die Laserlichtquelle 15 so steuert, dass der nur schematisch dargestellte Laserlichtstrahl zur Verschweissung der Bleche 6 und 7 genau dem Verlauf des Spaltes entlang der Kante 13 folgt. Nach der Schweisszone, d.h. in Förderrichtung, hinter dem Laserstrahl ist eine Anordnung 10 gemäss derjenigen von Figur 1 oberhalb der Schweissnaht angeordnet und eine Anordnung 11 gemäss derjenigen von Figur 1 unterhalb der Bleche. Diese beiden Anordnungen projizieren ebenfalls Linien quer zur Kante 13 bzw. zur Schweissnaht. Aus dem Bild der Linien können die Auswerteinrichtungen 16 bzw. 17 den Verlauf der Schweissnaht bestimmen und damit eine Schweissnahtkontrolle auf verschiedene Arten von Fehlern hin durchführen, was an sich bekannt ist und hier nicht näher beschrieben wird. Die Auswerteinrichtungen 16 und 17 geben ein entsprechendes Signal an die Steuereinrichtung 14 ab und diese kann an eine übergeordnete Steuerung 19 ein Signal abgeben, ob die aus den Blechen 6 und 7 zusammengeschweisste Platine den Qualitätsanforderungen genügt oder nicht.

Gemäss dem einem Aspekt der Erfindung wird an die jeweilige Kamera ein Belichtungssteuer-Signal 20 abgegeben, welches in Figur 2 von der Steuereinrichtung 14 abgegeben wird, welches aber auch direkt von der jeweiligen Auswerteinrichtung 18 bzw. 16 oder 17 an die Kamera abgegeben werden könnte. Das Steuersignal 20 beinhaltet die Information, das die Kamera 3 bei der Aufnahme des nächsten Bildes eine längere oder kürzere oder die gleiche Belichtungszeit wählen soll, als beim vorhergehenden Bild. Bei einer CCD-Kamera kann das Steuersignal anstelle der Belichtungszeit die Integrationszeit des CCD-Elementes bestimmen. Aufgrund der Information, ob das vorhergehende Bild der Linien 5 zu dunkel oder zu hell gewesen ist, wird also die Belichtung der jeweiligen Kamera für das nächste Bild beeinflusst. Es ergibt sich durch diesen Aspekt der Verbindung eine Verbesserung der Erkennung der projizierten Linien im aufgenommenen Bild. Vorzugsweise wird immer über die gleiche Kanten- bzw. Nahtlänge integriert, unabhängig von der Schweissgeschwindigkeit.

Es können auch Linien mit verschiedener Intensität quer zur Kante 13 projiziert werden, und zusätzlich ist die Belichtungsbeeinflussung der jeweiligen Kamera vorgesehen. Entsprechende Kameras, insbesondere CCD-Kameras sind handelsüblich und brauchen hier nicht näher erläutert zu werden.

Gemäss einem weiteren Aspekt der Erfindung kann die Gesamthelligkeit der projizierten Linien gesteuert werden. In diesem Fall wird also nicht die Belichtungszeit der Kamera oder die Integrationszeit des CCD-Elementes durch ein Signal aus der Auswerteinrichtung beeinflusst, sondern die Helligkeit des Linienprojektors. Diese Möglichkeit kann mit dem vorgängig geschilderten Ausführungsbeispiel mit Linien unterschiedlicher Intensität kombiniert sein. So kann die Helligkeit eines Linienprojektors gesteuert werden, der Linien gleicher Intensität projiziert, oder es kann die Helligkeit eines Linienprojektors gesteuert werden, der Linien unterschiedlicher Intensität erzeugt, wie dies vorstehend beschrieben worden ist. Die Steuerung der Helligkeit kann auch mit der Belichtungszeitsteuerung oder der Integrationszeitsteuerung kombiniert werden, wobei die steuernde Einrichtung in diesem Fall zwei Steuersignale, eines für den Projektor und eines für die Kamera abgibt.

Die Ausführungsbeispiele der Erfindung können wie folgt dargestellt werden:

| **Massnahme** | | **Wirkung** |
|---|---|---|
| 1. | Integrationszeit oder Verschlusszeit des Kamera-CCD-Elementes ändern (vorzugsweise so, dass immer über dieselbe Kanten- bzw. Nahtlänge integriert wird). | Belichtungsanpassung und damit immer gleiche Helligkeit des Bildes, vorzugsweise mit immer gleichbleibender Auflösung, unabhängig von der Schweissgeschwindigeit. |
| | | |
| 2. | Regeln der Grundintensität des Linienprojektors. | Gleiche Helligkeit des gestreuten und reflektierten Lichtes unabhängig vom generellen Reflexionsverhaltens des Bleches. |
| | | |
| 3. | Unterschiedliche Intensität der Linien des Linienprojektors. | Lokale Unterschiede der Reflektivität quer zur Kante bzw. Schweissnaht können kompensiert werden. |

## Patentansprüche

1. Verfahren zur Kantenverfolgung vor dem Schweissen und/oder zur Kanten- respektive Schweissnahtprüfung nach dem Schweissen bei der Schweissverbindung von Blechen (6,7) entlang einer gemeinsamen Kante (13), wobei von einem Linienprojektor Licht in der Form von mehreren quer über die Kante verlaufenden Linien (5) auf die Bleche (6,7) projiziert wird und das von einer Kamera (3) aufgenommene Bild der Linien ausgewertet wird, **dadurch gekennzeichnet, dass** bei jeder Bildauswertung festgestellt wird, ob die Helligkeit der Linien in einem vorgegebenen Bereich liegt und wenn nicht
- dass ein Steuersignal (20) erzeugt wird, welches für die folgende Bildaufnahme die Belichtungskontrolle der Kamera (3) beeinflusst, so dass das nächste Bild heller oder dunkler wird, und/oder
- dass ein Steuersignal erzeugt wird, welches für die folgende Bildaufnahme die Lichtintensität des in seiner Lichtintensität steuerbaren Linienprojektors (2) ändert, so dass die Helligkeit der Linien für das folgende Bild geändert wird.

2. Verfahren nach Anspruch 1, **dadurch gekennzeichnet, dass** eine CCD-Kamera eingesetzt wird, und dass zur Belichtungskontrolle die Integrationszeit des CCD-Elementes oder die Verschlusszeit des Kameraverschlusses verändert wird, wobei vorzugsweise jeweils über eine konstante, wählbare Kanten- bzw. Nahtlänge integriert wird.

3. Vorrichtung zur Kantenverfolgung vor dem Schweissen und/oder zur Kanten- respektive Schweissnahtprüfung nach dem Schweissen bei der Schweissverbindung von Blechen (6,7) entlang einer gemeinsamen Kante (13), umfassend eine Einrichtung (2) zur Erzeugung mehrerer quer über die Kante verlaufender Linien aus Licht, eine Aufnahmeeinrichtung (3) zur Aufnahme eines Bildes der Linien (5) und eine Auswerteinrichtung (14, 16, 17, 18) zur Auswertung des Bildes, **dadurch gekennzeichnet, dass**
- die Aufnahmeeinrichtung eine Kamera (3) mit steuerbarer Belichtungskontrolle, insbesondere eine CCD-Kamera mit steuerbarer Integrationszeit des CCD-Elementes und/oder steuerbarer Verschlusszeit aufweist, und dass die Auswerteinrichtung zur Abgabe eines Steuersignales (20) für die Belichtungskontrolle der Kamera ausgestaltet ist, und/oder
- dass die Einrichtung zur Linienerzeugung einen Linienprojektor (2) mit einem Steuereingang für die Lichtintensität der Lichtquelle aufweist, und dass die Auswerteinrichtung zur Abgabe eines mit dem Steuereingang verbundenen Steuersignales für den Linienprojektor ausgestaltet ist.
